# EUROPEAN PATENT APPLICATION

(11) **EP 0 980 701 A1**
(43) Date of publication of application: **23.02.2000**
(21) Application number: 99401792.9
(22) Date of filing: 18.07.1999
(51) Int. Cl.: B01D 53/04, B01D 53/34

(54) **Gas recovery unit**

(30) Priority: 20.08.1998 JP 23421398
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Yamashita, Naohiko, c/o Harima Technical Center, Kako-gun, Hyogo-ken (JP); Shimoura, Toshiyuki c/o Harima Technical Center, Kako-gun, Hyogo-ken (JP)
(74) Representative: Vesin, Jacques

(57) **Abstract**

Provided is a gas recovery unit, which unit is provided on an exhaust gas passage of a gas reactor, and which unit can effectively purify and recover a specified gas component from an exhaust gas without imparting any influence on the environment of said gas reactor. The gas recovery unit is provided on an exhaust gas passage for leading an exhaust gas from a gas reactor so as to purify and recover a predetermined gas in the exhaust gas, and comprises a differential pressure regulation valve on said exhaust gas passage, an air compressor downstream of said differential pressure regulation valve on said exhaust gas passage, a connection for connecting an exhaust gas purification passage to said exhaust gas passage upstream of said differential pressure regulation valve with a gas purifier on said exhaust gas purification passage. The unit further comprises a differential pressure measurement means for measuring a differential pressure between the upstream side and the downstream side of said differential pressure regulation valve and a differential pressure control means for controlling the degree to which said differential pressure regulation valve is open on the basis of a differential pressure measured by said differential pressure measurement means.

## Description

### BACKGROUND OF THE INVENTION

### Field of the Invention

The present invention relates to a gas recovery unit provided on an exhaust gas passage for leading an exhaust gas from a gas reactor where the flow rate thereof varies, so as to purify and recover a predetermined gas in the exhaust gas. The present invention also relates to such a gas recovery unit for recovering and purifying a specified gas in an exhaust gas, for instance, where it is necessary to reuse an unreacted gas or the like contained in an exhaust gas generated from a semiconductor manufacturing unit, or where discharge of a harmful gas is restricted.

### Description of the Related Art

When an exhaust gas from a gas reactor has been hitherto treated for purification in a gas recovery unit, recovery pressure has varied due to a variation in the flow rate of the exhaust gas from the gas reactor, and hence control of the recovery pressure has been difficult. Where recovery of an exhaust gas from a reactor requires stable operation pressure, recovery seldom occurs, and the exhaust gas is simply more often released after being subjected to decomposition treatments and/or dilution.

Many gas reactors usually have a plurality of reaction chambers where the gas flow rate is variously changed, and in many cases, the total quantity of exhaust gas generated in the reaction chambers is not constant. If the entirety of an exhaust gas is treated in an exhaust gas passage of a gas reactor where the quantity of the exhaust gas to be treated varies, any pressure variation will effect the exhaust gas passage and can also deleteriously influence the reaction conditions in the gas reactor. In light of environmental considerations, it is generally preferred to now recover and reuse a gas as opposed to simply discharging the gas.

Accordingly, it is an object of the present invention to provide a gas recovery unit provided on an exhaust gas passage of a gas reactor, which can effectively purify and recover a specified gas component from an exhaust gas, while imparting less influence on the environment of said gas reactor.

### SUAIMARY OF THE INVENTION

In accordance with the foregoing objective, the present invention provides a novel gas recovery unit. More particularly, in a gas recovery unit provided on an exhaust gas passage for leading an exhaust gas from a gas reactor so as to purify and recover a predetermined gas in the exhaust gas, the gas recovery unit comprises a differential pressure regulation valve on said exhaust gas passage, an air compressor downstream of said differential pressure regulation valve on said exhaust gas passage, a connection for connecting an exhaust gas purification passage to said exhaust gas passage upstream of said differential pressure regulation valve, with a gas purifier on said exhaust gas purification passage, a differential pressure measurement means for measuring a differential pressure between the upstream side and the downstream side of said differential pressure regulation valve and a differential pressure control means for controlling the extent to which said differential pressure regulation valve is open on the basis of a differential pressure measured by said differential pressure measurement means.

In the operation of the gas recovery unit, the treatment flow rate of said air compressor is preferably 10 to 200 times the maximum quantity of said exhaust gas. It is also preferred that a prepurification means for initially purifying the exhaust gas is provided upstream of said connection on said exhaust gas passage.

Furthermore, an auxiliary purifier may be advantageously provided between said differential pressure regulation valve and said air compressor on said exhaust gas passage, and said gas reactor is preferably a semiconductor manufacturing unit, with said gas purifier being preferably a hydrogen gas purifier or argon gas purifier.

In addition, a safety mechanism is preferably provided for stopping the supply of said exhaust gas to said exhaust gas purification passage when the differential pressure measured by said differential pressure measurement means is below a preselected reference value.

### BRIEF DESCRIPTION OF THE FIGURE OF THE DRAWING

The Figure of the Drawing is a schematic view of a gas recovery unit in accordance with the present invention.

### DETAILED DESCRIPTION OF THE PREFERRED EMBODIMENTS

In the operation of the gas recovery unit of the present invention, since a differential pressure regulation valve is provided on the exhaust gas passage and an air compressor is provided downstream of the differential pressure regulation valve on said exhaust gas passage, the downstream side of the differential pressure regulation valve can always be kept at a predetermined negative pressure, and hence a differential pressure can be generated between the upstream side and the downstream side of said differential pressure regulation valve. Since a connection part for connecting an exhaust gas purification passage to said exhaust gas passage is provided upstream of said differential pressure regulation valve, an exhaust gas can be permitted to flow through said exhaust gas purification passage on the basis of said differential pressure. Since a gas purifier is provided on said exhaust gas purification passage, the exhaust gas flowing into the exhaust gas purification passage is purified.

Furthermore, since a differential pressure measurement means is provided for measuring a differential pressure between the upstream side and the downstream side of said differential pressure regulation valve, and a differential pressure control means is provided for controlling the extent to which said differential pressure regulation valve is open on the basis of a differential pressure measured by said differential pressure measurement means, the pressure in the upstream side of said differential pressure regulation valve can be kept within a given range. Even if the quantity of an exhaust gas from said gas reactor varies, said gas purifier can be safely operated in a stable fashion while avoiding any deleterious influence on the gas reactor due to the pressure variation.

The treatment flow rate of the air compressor used is preferably 10 to 200 times the maximum quantity of said exhaust gas, and more preferably 30 to 100 times, and under this condition, good control is easily ensured.

If a prepurification part for initially purifying the exhaust gas is provided upstream of said connection on said exhaust gas passage, it will be possible to better maintain the quality of a gas purified and recovered by the gas purifier because miscellaneous gases which may interfere with the purification efficiency in the gas purifier can be removed for recovery with prepurification.

Further, if an auxiliary purifier is provided between the differential pressure regulation valve and the air compressor on said exhaust gas passage, it will also be possible to release the treated gas with less impact on the environment, particularly in those cases when restrictions apply and it is necessary to avoid any impact on the environment, even when the treated gas is discharged by the air compressor subsequent to dilution.

If a safety mechanism is provided which stops the supply of said exhaust gas to said exhaust gas purification passage when the differential pressure measured by said differential pressure measurement means is below a preselected reference value, in such a construction it can be assumed that the exhaust gas quantity to be forcibly discharged temporarily increases, but safe operation is maintained. Even in the case where the entire quantity of an exhaust gas is below the minimum of a predetermined variation, efficient operation of the gas reactor continues while the gas purification means is steadily operated.

In addition, if the gas recovery unit according to the present invention is applied to a case where said gas reactor is a semiconductor manufacturing unit and said gas purifier is a hydrogen gas purifier or argon gas purifier, the gas recovery unit according to the present invention has been found to have particular advantageous application. Using the gas recovery unit of the present invention allows recovery for reuse of important gases within the exhaust gas, particularly a gas used in the manufacture of semiconductors. Even if the exhaust gas requires a special treatment prior to discharge, the gas recovery unit of the present invention can decrease the quantity of exhaust gas to be discharged.

In a case where the variation characteristics of the exhaust gas quantity can be grasped depending on the operation situation of said gas reactor, the quantity of gas purified in the gas purifier can be controlled to a large extent by the addition of a flow rate control means for changing the quantity of gas to be caused to flow into said gas purifier in accordance with the differential pressure regulation valve.

Now referring to the figure of the drawing, a preferred embodiment of the present invention will be described in detail. In the figure, the following reference numbers are used:
1 -- gas reactor, 2 -- exhaust gas passage, 3 -- differential pressure regulation valve, 4 -- air compressor, 5 -- exhaust gas purification passage, 6 - connection part, 7 -- gas purifier, 81 -- differential pressure measurement means, 82 -- differential pressure control means.

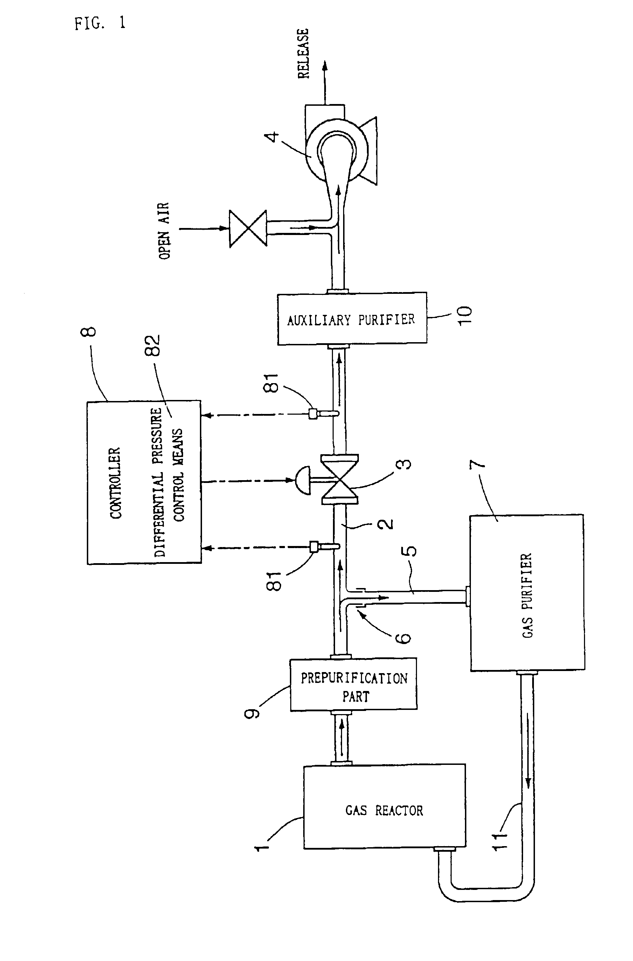

As shown in Fig. 1, a gas recovery unit according to the present invention is provided on an exhaust gas passage 2 of a semiconductor manufacturing unit, for example, a semiconductor film manufacturing unit having a plurality of epitaxial reaction chambers 1 (which will be hereinafter called EPI furnace) for manufacturing semiconductor films.

On the exhaust gas passage 2 for leading an exhaust gas from said EPI furnace 1 is provided a differential pressure regulation valve 3, and downstream of said differential pressure regulation valve 3 on said exhaust gas passage 2 is provided a blower 4 as an air compressor for releasing a gas introduced therein to the atmosphere while diluting said gas with a large amount of air (whose quantity is preferably about 30 times or more the quantity of the introduced gas). Upstream of said differential pressure regulation valve 3 is provided a connection part 6 for connecting an exhaust gas purification passage 5 to said exhaust gas passage 2, and on said exhaust gas purification passage 5 is provided a hydrogen gas purifier 7 as a gas purifier. Gas purified in 7 can be recycled to the gas reactor 1 via conduit 11.

On said differential pressure regulation valve 3 is provided a differential pressure measurement means 81 for measuring a differential pressure between the upstream side and the downstream side thereof and a controller 8 comprising a differential pressure control means 82 for controlling the degree to which said differential pressure regulation valve 3 is open on the basis of a differential pressure measured by the same differential pressure measurement means 81.

Further, upstream of said connection part 6 on said exhaust gas passage 2 is provided a prepurification part 9 for initially purifying the exhaust gas, and between said differential pressure regulation valve 3 and said blower 4 on said exhaust gas passage 2 is provided an auxiliary purifier 10.

### EXAMPLE

Employing the construction shown in Fig. 1, a specific example is hereby provided regarding the use of the gas recovery unit of the present invention.

The gas recovery unit according to the present invention is applied to an EPI furnace operated at a nominal operation pressure of -100 mmAq, with the extent of its pressure variation being restrained below 20 mmAq. The gas recovery unit will be operated so that the intake pressure of said blower 4 becomes -140 mmAq, and the differential pressure control means shall be set so that the measurement pressure of said differential pressure measurement means becomes 40 mmAq. The blower 4 has a capacity that is about 100 times the exhaust capacity of said EPI furnace and is set up to take in air and release an exhaust gas as it is diluted. Hence, the blower 4 can be stably operated without being influenced by the intake pressure, even when the exhaust gas quantity varies.

By setting the aforementioned condition, a construction is obtained wherein the pressure in the vicinity of said connection 6 is kept at -100 mmAq and about 10% of the exhaust gas from the EPI furnace is always released. The remaining portion of the exhaust gas from the EPI furnace is boosted to a pressure of about 2,000 mmAq by a Roots blower and introduced into the gas purifier, and it is intended to supply the same exhaust gas for reuse to the EPI furnace again after purification.

When the exhaust gas flow rate of the EPI furnace becomes less than a predetermined value or a differential pressure between the upstream side and the downstream side of said differential pressure regulation valve 3 is reversed depending on the compensation of said differential pressure control means, air is permitted to flow back from the intake part of said blower 4 and hence a danger of explosion will exist through the reaction of air with hydrogen. In order to address such a case, there is provided a safety mechanism for stopping the operation of said blower to ensure safety when the differential pressure measured by said differential pressure measurement means is below a reference value.

As for the EPI furnace in said semiconductor manufacturing unit, dozens of furnaces are actually operated in a batch process, where the stocking of materials and the take-out of products are concretely carried out as they are exposed to the atmospheric air, various gases are used such as hydrogen for reaction, nitrogen for purge, hydrogen chloride for etching and silicon chloride compound for deposit, and hence an exhaust gas is generated which comprises these gases in a mixed state. Furthermore, a scrubber or the like is used as said prepurification part, and the removal of a trace of a water-soluble gas such as hydrogen chloride is effectively conducted.

Owing to the aforementioned mechanism, the pressure variation can be restrained between ± 10 mmAq or less, even when a flow rate variation accompanies an irregular operation of the EPI furnace.

Although a construction for carrying out the purification of hydrogen gas has been described in the aforementioned example, the gas recovery unit according to the present invention may be also applied to other gases, such as, for example, argon gas. As for the gas reactor, purification part and auxiliary purifier, various types of these apparatuses can be used in combination as is deemed necessary.

## Claims

1. A gas recovery unit on an exhaust gas passage for leading an exhaust gas from a gas reactor so as to purify and recover a predetermined gas in the exhaust gas, comprising:
a differential pressure regulation valve on said exhaust gas passage, an air compressor downstream of said differential pressure regulation valve on said exhaust gas passage, a connection for connecting an exhaust gas purification passage to said exhaust gas passage upstream of said differential pressure regulation valve, with a gas purifier on said exhaust gas purification passage,
a differential pressure measurement means for measuring a differential pressure between the upstream side and the downstream side of said differential pressure regulation valve, and a differential pressure control means for controlling the extent to which said differential pressure regulation valve is open on the basis of a differential pressure measured by said differential pressure measurement means.

2. The gas recovery unit according to claim 1, wherein the treatment flow rate of said air compressor is from 10 to 200 times the maximum quantity of said exhaust gas.

3. The gas recovery unit according to claim 1, wherein a prepurification part for purifying the exhaust gas is provided upstream of said connection on said exhaust gas passage.

4. The gas recovery unit according to claim 1, wherein an auxiliary purifier is provided between said differential pressure regulation valve and said air compressor on said exhaust gas passage.

5. The gas recovery unit according to claim 1, wherein said gas reactor is a semiconductor manufacturing unit and said gas purifier is a hydrogen gas purifier or argon gas purifier.

6. The gas recovery unit according to claim 1, wherein a safety mechanism is provided for stopping the supply of said exhaust gas to said exhaust gas purification passage when the differential pressure measured by said differential pressure measurement means is below a preselected reference value.

7. The gas recovery unit according to claim 2, wherein a prepurification part for purifying the exhaust gas is provided upstream of said connection on said exhaust gas passage.

8. The gas recovery unit according to claim 2, wherein an auxiliary purifier is provided between said differential pressure regulation valve and said air compressor on said exhaust gas passage.

9. The gas recovery unit according to claim 2, wherein said gas reactor is a semiconductor manufacturing unit and said gas purifier is a hydrogen gas purifier or argon gas purifier.

10. The gas recovery unit according to claim 2, wherein a safety mechanism is provided for stopping the supply of said exhaust gas to said exhaust gas purification passage when the differential pressure measured by said differential pressure measurement means is below a preselected reference value.

11. The gas recovery unit according to claim 3, wherein an auxiliary purifier is provided between said differential pressure regulation valve and said air compressor on said exhaust gas passage.

12. The gas recovery unit according to claim 3, wherein said gas reactor is a semiconductor manufacturing unit and said gas purifier is a hydrogen gas purifier or argon gas purifier.

13. The gas recovery unit according to claim 3, wherein a safety mechanism is provided for stopping the supply of said exhaust gas to said exhaust gas purification passage when the differential pressure measured by said differential pressure measurement means is below a preselected reference value.

14. The gas recovery unit according to claim 4, wherein said gas reactor is a semiconductor manufacturing unit and said gas purifier is a hydrogen gas purifier or argon gas purifier.

15. The gas recovery unit according to claim 4, wherein a safety mechanism is provided for stopping the supply of said exhaust gas to said exhaust gas purification passage when the differential pressure measured by said differential pressure measurement means is below a preselected reference value.

16. The gas recovery unit according to claim 5, wherein a safety mechanism is provided for stopping the supply of said exhaust gas to said exhaust gas purification passage when the differential pressure measured by said differential pressure measurement means is below a preselected reference value.

17. A method of recovering a gas using the gas recovery unit of claim 1.

18. A method of recovering a gas from the exhaust gas from a gas reactor in a semiconductor manufacturing unit, which comprises passing the exhaust gas through the gas recovery unit of claim 5.

19. A method of recovering a gas from the exhaust gas from a gas reactor in a semiconductor manufacturing unit, which comprises passing the exhaust gas through the gas recovery unit of claim 16.
